# EUROPEAN PATENT APPLICATION

(11) **EP 2 045 754 A1**
(43) Date of publication of application: **08.04.2009**
(21) Application number: 07117788.5
(22) Date of filing: 02.10.2007
(51) Int. Cl.: G06F 21/20

(54) **Challenge-response method and system**

(71) Applicant: Nederlandse Organisatie voor Toegepast- Natuurwetenschappelijk Onderzoek TNO, 2628 VK Delft (NL)
(72) Inventor: Joosten, Hendrikus Johannes Maria, 9861TJ Grootegast (NL); Broekhuijsen, Bertram Jeroen, 9718 RT Groningen (NL); Siljee, Johanneke, 2628 VK Delf (NL)
(74) Representative: Hatzmann, Martin

(57) **Abstract**

Method for performing a challenge-response session between a system (5) and a user. the system outputs challenge information, which is displayed (3) in bitmap, graphic or any other non-computer-readable format. The user sends response information (6) which is related to the content of the challenge. The system checks the response with the challenge. The challenge comprises a response instruction w.r.t. the response to be sent by the user to the system. The system checks the response with the challenge, taking into account the semantic content of the relevant instruction. Preferably, the content of the instruction is variable per session. The content of the instruction may be related to a user identifier, e.g. a user password.

## Description

The invention refers to a method for performing a challenge-response session between a system and a user.

The simplest example of a challenge-response protocol is password authentication, where a system asks the user for a password and the valid response - checked by the system - is the correct password.

Challenge-response protocols, specially developed to prevent (undesired) automatic responses by machines, may comprise the use of a "captcha" ("completely automated public Turing test to tell computers and humans apart") in which the challenge is a (distorted) image (in bitmap or any other non-computer-readable format) of some text, and the user responds by typing over (the content of) that text. The distortion is designed to make automated optical character recognition (OCR) difficult and preventing a computer program from passing as a human.

So challenge-response type sessions may comprise the steps of:
- the system outputs challenge information ("challenge" hereinafter), which is displayed in bitmap or any other non-computer-readable (i.e. only human readable) format;
- the user sends response information, called "response" hereinafter, which is related to the content of the challenge;
- the system checks the response with the challenge.

One aim of the present invention is to enhance the security level of systems or services. To that end it is, according to the invention, preferred that the challenge (message, text) comprises an (explicit) response instruction, hereinafter called "instruction", w.r.t. the response to be sent by the user to the system, after which the system checks the response, taking into account the semantic content, hereinafter called "content", of the relevant instruction given by means of the challenge message.

It is preferred that the content of the instruction will be variable per session.

Moreover, it is preferred that the content of the instruction refers to a user identifier or any information which only can be given by the user, e.g. a user password, possibly supplemented with less secure information such as the user's ZIP code, age etc.

### EXEMPLARY EMBODIMENT

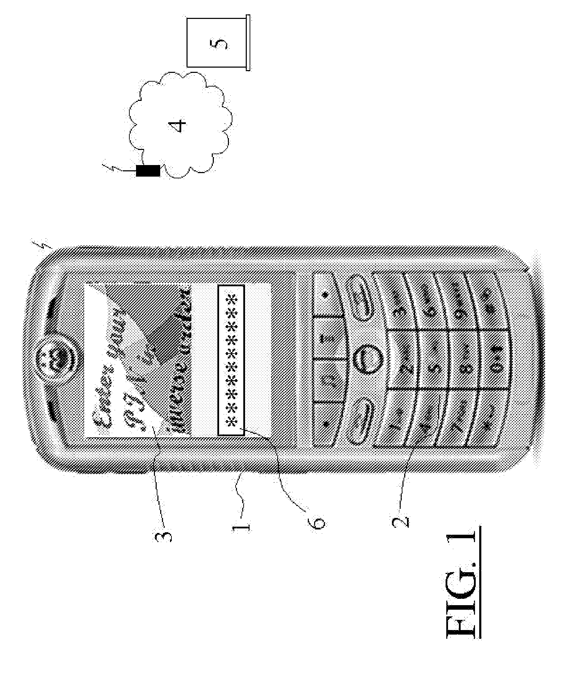

The invention will be discussed more in detail using an exemplary embodiment of a system in which the method according to the invention can be performed, referring to figure 1 which shows such a system.

Figure 1 shows a terminal 1, comprising a keyboard 2 and a display 3. The mobile 1 is capable to communicate with a system 5 via a network 4, and to make use of a service which is hosted at that system 5. For logging in to that service, a challenge-response session must be gone through, which comprises that the system (i.e. the service or server) outputs a challenge message or text in bitmap or any other non-computer-readable format, which is displayed on the terminal display 3. To minimize the chance that any (intruding) system might still be able to read (e.g. using OCR software, which is able to convert graphic information into computer readable - e.g. ASCII - characters), interpret and (mis)use the challenge message, it is preferred that the characters of the challenge text are deformed or distorted; as can be seen in figure 1.

Different from prior art "captcha" based methods, wherein only a - graphically displayed and distorted - word or number is displayed without any further instruction (besides any standard instruction, outside the proper captcha field, e.g. the instruction to read and type over the displayed word or number within the captcha field), in this new method according the present invention the challenge message itself comprises a response instruction, which instruction has to be effected by the user. In figure 1 this instruction reads: "Enter your PIN in inverse order". Another instruction could be: "Add your ZIP code to your PIN code" or similar instructions. So the (graphically displayed) challenge message comprises a (not standard) instruction (1) which refers to information which only can be known by the user, i.e. is user specific, e.g. the user's PIN code, and which may or may not be combined with not-confidential user information (like ZIP code etc.).

The user enters the requested response information into an input field 6 and sends it to the system 5. In the case of the challenge message "Enter your PIN in inverse order", the system checks the response, e.g. "0987CBA4321", with the challenge, the semantic content of which is: <PIN characters, inverse order>. When the system knows (from an earlier registration of the user) that the user's PIN is "1234ABC7890", the system will record the PIN characters, invert their order and compare the result with the user's PIN to check whether the authentication is correct.

In the same way, if the challenge message is "Add your ZIP code to your PIN code", the system knows that the semantics of this is <PIN characters + ZIP characters>, which can be checked by the system. Besides operations like "invert characters" (example 1), "add characters" (example 2) etc., also arithmetical operations may be performed, e.g. "Add 1 to the each numeral of your PIN". Such arithmetical instructions, however, may be less user friendly. In any case, the system checks the response with the challenge, taking into account the (semantic) content of the relevant challenge instruction.

To enhance the security, it is preferred that the content of the instruction is variable per session, e.g. is varied between several instruction like "Enter your PIN in inverse order", "Add your ZIP code to your PIN code", "Add 1 to the each numeral of your PIN", etc.

## Claims

1. Method for performing a challenge-response session between a system (5) and a user, comprising the steps of:
- the system outputs challenge information, called "challenge" hereinafter, which is displayed (3) in bitmap, graphic or any other non-computer-readable format;
- the user sends response information (6), called "response" hereinafter, which is related to the content of the challenge;
- the system checks the response with the challenge;
wherein the challenge comprises a response instruction, hereinafter called "instruction", w.r.t. the response to be sent by the user to the system, and the system checks the response with the challenge, taking into account the semantic content, hereinafter called "content", of the relevant instruction.

2. Method according to claim 1, the content of the instruction being variable per session.

3. Method according to any preceding claim, the content of the instruction being related to a user identifier, e.g. a user password.

4. System (5) for performing a challenge-response session with a user, using the method according to any of claims 1 - 3.

5. Software program means for performing a method according to any of claims 1 - 3.
